# EUROPÄISCHE PATENTSCHRIFT

(11) **EP 3 370 593 B1**
(45) Veröffentlichungstag und Bekanntmachung des Hinweises auf die Patenterteilung: **05.05.2021**
(21) Anmeldenummer: 16790357.4
(22) Anmeldetag: 02.11.2016
(51) Int. Cl.: A47L 13/58, A47J 47/18

(54) **EIMER**
BUCKET
SEAU

(30) Priorität: 04.11.2015 DE 102015014122
(43) Veröffentlichungstag der Anmeldung: 12.09.2018
(73) Patentinhaber: Carl Freudenberg KG, 69469 Weinheim (DE)
(72) Erfinder: RÜCKHEIM, Markus, 64347 Griesheim (DE); MAST, Christian, 68165 Mannheim (DE); KOSUB, Mike, 76646 Bruchsal (DE); CASCIONE, Tomaso, 20149 Milano (IT)
(86) Internationale Anmeldenummer: PCT/EP2016/076426
(87) Internationale Veröffentlichungsnummer: WO 2017/076904

(56) Entgegenhaltungen:
- EP-A2- 2 774 526
- CH-A- 98 751
- GB-A- 742 050
- US-A1- 2010 287 724

## Beschreibung

### Technisches Gebiet

Die Erfindung betrifft einen Eimer, mit einer Längsrichtung und einer Querrichtung, der eine erste Erstreckung in Längsrichtung und eine zweite Erstreckung in Querrichtung aufweist, wobei die erste Erstreckung größer als die zweite Erstreckung ist, umfassend zwei Längsseiten sowie eine vordere und eine hintere Querseite und zumindest einen im Wesentlichen bügelförmigen Henkel, wobei sich der zumindest eine Henkel in Längsrichtung erstreckt und in Querrichtung schwenkbar ist.

### Stand der Technik

Ein solcher Eimer ist aus der EP-A-2774526 bekannt. Der Eimer weist einen Ausguss auf, der in der Längsseite des Eimers angeordnet und als offene Verformung der Eimerwand ausgebildet ist.

Weitere Eimer sind allgemein bekannt und gelangen zum Beispiel als Putzeimer in Haushalten zur Anwendung.

Die Längsseiten und die Querseiten sind ineinander übergehend ausgebildet und begrenzen das Innere des Eimers in Umfangsrichtung.

Der Henkel erstreckt sich beim vorbekannten Eimer in Querrichtung und ist in Längsrichtung schwenkbar. Die Anlenkung des Henkels erfolgt an den beiden sich in Querrichtung gegenüberliegenden Längsseiten des Eimers.

Der obere Rand des Eimers bildet einen Ausguss, zum Beispiel mit einer schnabelförmigen Tropfnase, wobei der im Eimer befindliche Inhalt über diesen oberen Rand hinweg bedarfsweise ausgegossen werden kann.

Dabei ist jedoch zu beachten, dass die Handhabung eines solchen vorbekannten Eimers oftmals wenig zufriedenstellend ist, insbesondere dann, wenn der Eimer ein großes Fassungsvermögen und bei maximaler Befüllung deshalb auch ein großes Gewicht aufweist. Beim Tragen des Eimers muss der Benutzer seine Hand, mit der er den Eimer trägt, um 90 Grad bezogen auf die natürliche Handhaltung, verdrehen, um den sich in Querrichtung erstreckenden Henkel sicher greifen zu können.
Die natürliche Handhaltung ist jedoch die, bei der die Innenflächen der Hände einander und dem Körper des Benutzers zugewandt sind, die Daumen der jeweiligen Hand also im Wesentlichen nach vorne zeigen.
Es gibt praktisch zwei Möglichkeiten, den vorbekannten Eimer zu tragen. Entweder muss der Handrücken nach vorne und die Handinnenfläche nach hinten gedreht werden, um den Eimer greifen zu können, oder es ist umgekehrt, so dass die Handinnenfläche nach vorne und der Handrücken nach hinten ausgerichtet sind. Beides ist in ergonomischer Hinsicht von Nachteil und kann, insbesondere bei häufiger Benutzung des Eimers, zu gesundheitlichen Beeinträchtigungen des Benutzers führen, wie zum Beispiel zu Verspannungen von Schulter und/oder Arm und/oder Hand.
Auch ein Tragen des Eimers vor dem Körper führt zu Verspannungen, insbesondere zu Verspannungen im Rücken, und ist für den Benutzer äußerst unbequem.
Wird der Inhalt des Eimers über den oberen Rand des Eimers ausgegossen, ergibt sich häufig ein zu starker und/oder zu breiter Strahl, der speziell in privaten Haushalten nur schwer zu handhaben ist.

In privaten Haushalten werden Eimer häufig in kleine, haushaltsübliche Spülbecken oder in Toilettenschüsseln entleert. Ein zu starker und/oder zu breiter Strahl ist nur schwer zu kontrollieren und zu dirigieren. Ein Teil des Inhalts kann beim Entleeren des Eimers verschüttet werden, was zu unerwünschten Verunreinigungen rund um Spülbecken oder Toilettenschüssel führt.

### Darstellung der Erfindung

Der Erfindung liegt die Aufgabe zu Grunde, einen Eimer der vorbekannten Art derart weiterzuentwickeln, dass er sich besser handhaben lässt. Insbesondere soll die Ergonomie beim Tragen des Eimers verbessert und ein sauberes sowie kontrolliertes Entleeren des Eimers ermöglicht werden.

Diese Aufgabe wird erfindungsgemäß mit den Merkmalen von Anspruch 1 gelöst. Auf vorteilhafte Ausgestaltungen nehmen die Unteransprüche Bezug.

Zur Lösung der Aufgabe ist es vorgesehen, dass sich der zumindest eine Henkel in Längsrichtung erstreckt und in Querrichtung schwenkbar ist und dass ein Ausguss des Eimers als eine in sich geschlossene Durchbrechung ausgebildet und in der vorderen Querseite angeordnet ist.
Hierbei ist von Vorteil, dass der Eimer durch die sich in Längsrichtung erstreckende Anordnung des Henkels insgesamt eine gute Ergonomie aufweist. Der Benutzer kann die natürliche Handhaltung mit nach innen zueinander ausgerichteten Handinnenflächen auch dann beibehalten, wenn er den Eimer trägt. Auch volle und dadurch schwere Eimer können dadurch möglichst sicher und gut getragen werden. Die Gefahr von Verspannungen in Rücken, Schulter, Arm und Hand des Benutzers ist dadurch auf ein Minimum reduziert. Außerdem ist von Vorteil, dass durch den sich in Längsrichtung erstreckenden Henkel beim Tragen des Eimers ein Aufschaukeln des Eimers in Längsrichtung ausgeschlossen ist. Auch der Inhalt des Eimers bei dessen Transport schaukelt sich, wenn überhaupt, nur in geringem Maß auf und schwappt deshalb unter normalen Bedingungen nicht über. Ein Pendeln des Eimers in Längsrichtung unter dem Henkel, das bei Eimern aus dem Stand der Technik mit sich in Querrichtung erstreckendem Henkel vom Benutzer mühevoll ausgeglichen werden muss, ist durch die erfindungsgemäße Anordnung des Henkels in Längsrichtung ausgeschlossen.

Außerdem ist von Vorteil, dass sich der Inhalt des Eimers durch den erfindungsgemäßen Ausguss sauber und kontrolliert ausgießen lässt.
Wird der Eimer zum Ausleeren des Inhalts um die sich in Querrichtung erstreckende Querachse des Eimers gekippt, bewegt sich der Inhalt des Eimers zunächst zur vorderen Querseite, staut sich an dieser vorderen Querseite so lange auf, bis der Ausguss in Form der Durchbrechung erreicht ist und ergießt sich dann durch die Durchbrechung hindurch. Dadurch ergibt sich ein in seiner Breite klar definierter und deshalb leicht zu handhabender Strahl, so dass der Eimer auch gut in privaten Haushalten zur Anwendung gelangen kann, in denen zum Beispiel auch haushaltsübliche Spülbecken oder Toilettenschüsseln zum Entleeren des Eimers benutzt werden.
Dadurch, dass sich der Eimer und damit auch dessen Inhalt durch die erfindungsgemäße Anordnung des Henkels in Längsrichtung beim Tragen des Eimers praktisch nicht mehr aufschaukelt, besteht während der bestimmungsgemäßen Verwendung des Eimers praktisch keine Gefahr, dass der Inhalt des Eimers unerwünscht durch die unterhalb des Rands des Eimers angeordnete Durchbrechung verschüttet wird.

Durch die Anordnung des Henkels in Längsrichtung in Verbindung mit dem Ausguss in Form der in sich geschlossenen Durchbrechung weist der erfindungsgemäße Eimer insgesamt ausgezeichnete Gebrauchseigenschaften auf.

Gemäß einer vorteilhaften Ausgestaltung kann es vorgesehen sein, dass das Verhältnis aus erster Erstreckung zu zweiter Erstreckung ≥ 1,5 ist. Derartige Eimer können zum Beispiel oval oder rechteckig sein. Durch die relativ geringeren Abmessungen in Querrichtung lassen sich auch vergleichsweise großvolumige Eimer nahe am Körper des Benutzers und deshalb ergonomisch günstig tragen.

Die Durchbrechung kann eine als Tropfschutz ausgebildete Tropfnase aufweisen, die sich entlang der Unterseite der Durchbrechung erstreckt. Hierbei ist von Vorteil dass beim Entleeren des Inhalts aus dem Eimer nichts verschüttet wird, insbesondere dass die Umgebung des Eimers durch den Tropfschutz auch beim Entleeren des Eimers und danach nicht durch abtropfenden Inhalt, zum Beispiel schmutzige Reinigungsflüssigkeit, verunreinigt wird.

Nach einer ersten Ausgestaltung kann die Tropfnase einstückig mit der Begrenzung der Durchbrechung ausgebildet sein. Hierbei ist von Vorteil, dass ein solcher Eimer einen einfachen und teilearmen Aufbau aufweist und daher fertigungstechnisch und wirtschaftlich günstig herstellbar ist. Eine einstückig mit der Begrenzung der Durchbrechung ausgebildete Tropfnase ist aus fertigungstechnischen Gründen, insbesondere wegen der Entformbarkeit des Eimers aus seinem Herstellungswerkzeug, wenn dieser aus einem polymeren Werkstoff besteht, vergleichsweise schwach konturiert.

Nach einer anderen Ausgestaltung kann die Tropfnase als separat erzeugtes Einzelteil ausgebildet und flüssigkeitsdicht in der Durchbrechung angeordnet sein. Hierbei ist von Vorteil, dass die Gestalt der Tropfnase an die jeweiligen Erfordernisse des Anwendungsfall gut angepasst werden kann. In Abhängigkeit vom jeweiligen Anwendungsfall kann die Tropfnase deshalb stärker oder weniger stark konturiert ausgebildet sein. Ein Eimer mit einer separat erzeugten Tropfnase weist deshalb besonders gute Gebrauchseigenschaften beim Entleeren auf.
Die flüssigkeitsdichte Verbindung zwischen der Tropfnase und der Durchbrechung ist vorgesehen, um Undichtigkeiten im Übergangsbereich zwischen der Durchbrechung und der Tropfnase und dadurch eine unerwünschte Leckage in diesem Bereich zu vermeiden.

Die Tropfnase kann durch eine kraft- und/oder formschlüssige Verbindung zerstörungsfrei lösbar in der Durchbrechung angeordnet sein. Durch eine derartige Anordnung können Eimer und separat erzeugteTropfnase nach Art eines Baukastensystems kombiniert werden. Beispielsweise besteht die Möglichkeit, unterschiedlich ausgebildete Eimer mit ein und derselben Tropfnase oder unterschiedlich ausgebildete Tropfnasen mit ein und demselben Eimer zu kombinieren.

Die Tropfnase kann eine sich in den Eimer erstreckende Markierung zur Anzeige eines maximal zulässigen Füllstands im Eimer aufweisen. Der maximal zulässige Füllstand im Eimer ist dabei derart ausgelegt, dass auch ein maximal befüllter Eimer bei bestimmungsgemäßer Verwendung nicht überschwappt und die Umgebung verunreinigt.
Der Eimer selbst braucht keine Füllstandsanzeige aufzuweisen, wenn diese einstückig mit der Tropfnase ausgebildet ist.

Gelangt nur ein Henkel zur Anwendung, kann dieser durch eine vordere und eine hintere Anlenkung an den entsprechenden Querseiten angelenkt sein, wobei der Ausguss unterhalb der vorderen Anlenkung angeordnet ist. Die Durchbrechung ist deshalb unterhalb der vorderen Anlenkung angeordnet, um den Strahl beim Entleeren des Eimers nicht durch die vordere Anlenkung oder den Henkel abzulenken. Der Strahl ergießt sich durch die Durchbrechung direkt aus dem Eimer heraus. Die vordere Anlenkung des Henkels, die oberhalb der Durchbrechung angeordnet ist, oder der Henkel selbst werden beim Entleeren des Eimers vom Strahl aus der Durchbrechung nicht getroffen.

Die zuvor beschriebenen Anlenkungen sind, in Querrichtung betrachtet, bevorzugt jeweils mittig an den entsprechenden Querseiten angeordnet. Weist der Eimer nur einen Henkel auf, der wie zuvor beschrieben angelenkt ist, hat der Eimer einen teilearmen Aufbau, ist einfach und kostengünstig herstellbar und hat außerdem nur ein geringes Eigengewicht. Der Eimer ist dann bevorzugt, in einer Draufsicht betrachtet, in Querrichtung symmetrisch ausgebildet. Unter dem Henkel pendelt sich der Eimer dadurch in Querrichtung praktisch automatisch waagerecht aus.

Der Henkel kann, in Längsrichtung betrachtet, auf der dem Ausguss abgewandten Seite einen im Wesentlichen rutschfesten Griffbereich aufweisen. Durch den rutschfesten Griffbereich wird das Entleeren des Eimers erleichtert. Eine Hand des Benutzers greift den Henkel beim Entleeren des Eimers nahe der hinteren Anlenkung, so dass dadurch der Eimer, praktisch von selbst, mit seinem Ausguss nach unten kippt und der Inhalt dadurch durch die Durchbrechung entleert wird.
Der rutschfeste erste Griffbereich kann beispielsweise durch eine griffige Oberflächenprofilierung des Henkels in diesem Bereich und/oder eine Gummierung erreicht werden.

Nach einer anderen Ausgestaltung kann der Eimer zwei sich im Wesentlichen parallel zueinander erstreckende Henkel aufweisen, von denen jeder Henkel jeweils durch eine vordere und jeweils durch eine hintere Anlenkung an einer der Längsseiten angelenkt ist, wobei die Henkel, in Querrichtung betrachtet, zum Tragen des Eimers über dem Eimer aneinander anlegbar sind. Hierbei ist von Vorteil, dass insbesondere großvolumige und voll befüllte Eimer von zwei Personen gleichzeitig getragen werden können. Jeder hält dabei einen der beiden Henkel ergonomisch günstig in der Hand und nahe am Körper.

Zusätzlich oder alternativ zum ersten Griffbereich können die Henkel in Längsrichtung mittig jeweils einen als Tragezone ausgebildeten zweiten Griffbereich aufweisen. Der zweite Griffbereich kann zum Beispiel ergonomisch besonders günstig derart ausgeführt sein, dass sich dieser Griffbereich besonders gut und angenehm in die Hand des Benutzers schmiegt. Der zweite Griffbereich ist ausreichend breit und/oder gepolstert ausgebildet, um auch bei voll beladenem Eimer ein unangenehmes Einschneiden in die Hand des Benutzers zu verhindern. Der zweite Griffbereich kann, zum Beispiel ähnlich wie der erste Griffbereich, gummiert sein.

Eimer sind generell in vielen Größen und Formen bekannt.
Gelangt ein Eimer als Putzeimer zur Anwendung, kann er eine Auswringvorrichtung für ein Reinigungsgerät umfassen. Die Auswringvorrichtung kann unlösbar oder zerstörungsfrei lösbar mit dem Eimer, bevorzugt mit dem Rand des Eimers, verbunden sein. Eine zerstörungsfrei lösbare Verbindung kann durch eine Rastverbindung gebildet sein. Rastnasen der Auswringvorrichtung können zum Beispiel mit Hinterschneidungen am Rand des Eimers in Eingriff sein.

Gemäß einer vorteilhaften Ausgestaltung kann am Henkel eine klammerförmige Aufnahme für den Stiel eines Reinigungsgeräts vorgesehen sein, so dass das Reinigungsgerät, beispielsweise eine Wischmopp, senkrecht stehend im Eimer und fixiert durch die klammerförmige Aufnahme gehalten ist. Die klammerförmige Aufnahme kann einen einstückigen und materialeinheitlichen Bestandteil des Henkels bilden.

Der Eimer kann einen Eimerboden mit einem in Längsrichtung hinten angeordneten Griff aufweisen. Beim Entleeren des Eimers hält der Benutzer den Eimer mit einer Hand am ersten Griffbereich des Henkels und mit der anderen Hand hält er den Griff im hinteren Bereich des Eimerbodens. Dadurch wird das Entleeren des Eimers erleichtert, und der Inhalt des Eimers kann besonders gut kontrolliert und gezielt ausgeschüttet werden.

### Kurzbeschreibung der Zeichnung

Zwei Ausführungsbeispiele des erfindungsgemäßen Eimers werden nachfolgend anhand der Figuren 1 bis 11 näher erläutert.

Diese zeigen, jeweils in schematischer Darstellung:
- Figur 1:: ein erstes Ausführungsbeispiel eines erfindungsgemäßen Eimers mit nur einem Henkel in perspektivischer Darstellung,
- Figur 2:: einen Längsschnitt durch den Eimer aus Figur 1,
- Figur 3:: eine Seitenansicht des Eimers aus Figur 2,
- Figur 4:: eine Draufsicht auf den Eimer gemäß Figur 1,
- Figur 5:: eine Vorderansicht des Eimers gemäß Figur 1,
- Figur 6:: ein zweites Ausführungsbeispiel eines erfindungsgemäßen Eimers mit zwei Henkeln in perspektivischer Darstellung,
- Figur 7:: einen Längsschnitt durch den Eimer aus Figur 6,
- Figur 8:: eine Seitenansicht des Eimers aus Figur 7,
- Figur 9:: eine Draufsicht auf den Eimer gemäß Figur 6,
- Figur 10:: eine Vorderansicht des Eimers gemäß Figur 6,
- Figur 11:: eine weitere Tropfnase, abweichend gestaltet von den Tropfnasen aus den Figuren 1 bis 10.

### Ausführung der Erfindung

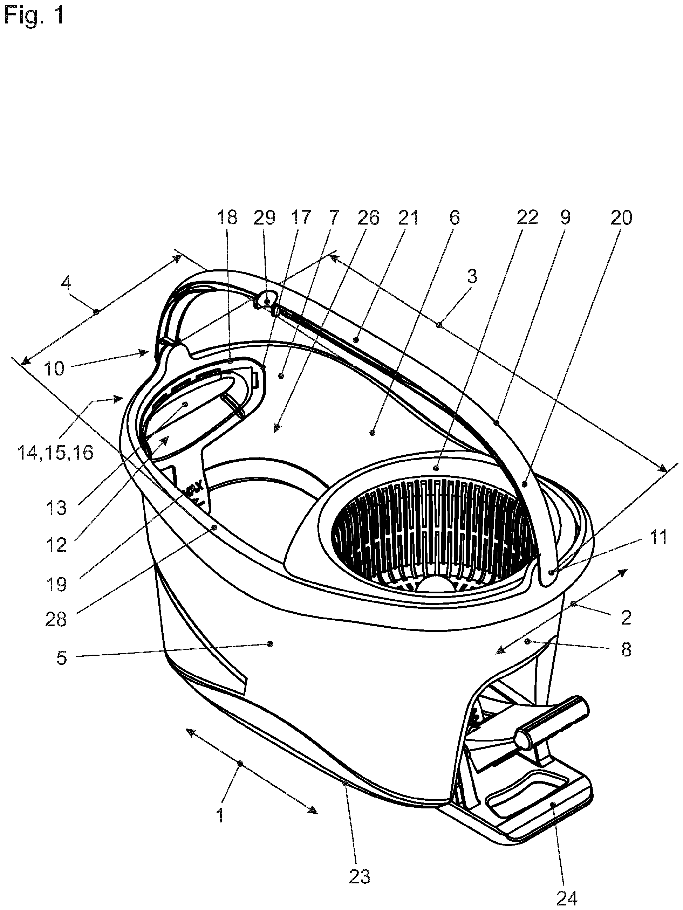

In den Figuren 1 bis 5 ist ein erstes Ausführungsbeispiel eines erfindungsgemäßen Eimers gezeigt. Der Eimer ist im Wesentlichen oval gestaltet, mit einer ersten Erstreckung 3 in Längsrichtung 1 und einer zweiten Erstreckung 4 in Querrichtung 2, wobei die erste Erstreckung 3 größer als die zweite Erstreckung 4 ist.
Der Eimer umfasst den Eimerboden 23 und die beiden Längsseiten 5, 6, die jeweils in die vordere 7 und hintere Querseite 8 übergehen. Der Henkel 9 überspannt die Öffnung 26 des Eimers in Längsrichtung 1 und weist die Form eines Bügels auf. Der Henkel 9 ist in Querrichtung 2 schwenkbar und durch die vordere Anlenkung 10 an der vorderen Querseite 7 und durch die hintere Anlenkung 11 an der hinteren Querseite 8 angelenkt.

Der Eimer besteht einschließlich des Henkels 9 aus einem polymeren Werkstoff.

In der vorderen Querseite 7 ist ein als in sich geschlossene Durchbrechung 13 ausgebildeter Ausguss 12 vorgesehen, wobei die Durchbrechung 13, in der Höhe 27 des Eimers betrachtet, unterhalb der vorderen Anlenkung 10, also zwischen der Öffnung 26 des Eimers und dem Eimerboden 23, angeordnet ist.

Im hier gezeigten Ausführungsbeispiel beträgt das Verhältnis aus erster Erstreckung 3 zu zweiter Erstreckung 4 knapp 2. Der Eimer ist also etwa doppelt so lang wie breit.

Die Längsseiten 5, 6 und die Querseiten 7, 8 sind einstückig ineinander übergehend und materialeinheitlich ausgebildet. Die Anlenkungen 10, 11 sind weit oben am Eimer, im Bereich seines Rands 28 angeordnet.

In Figur 1 ist eine perspektivische Ansicht des Eimers gezeigt. Die Anlenkungen 10, 11 sind, in Querrichtung 2 betrachtet, jeweils mittig an den entsprechenden Querseiten 7, 8 angeordnet.

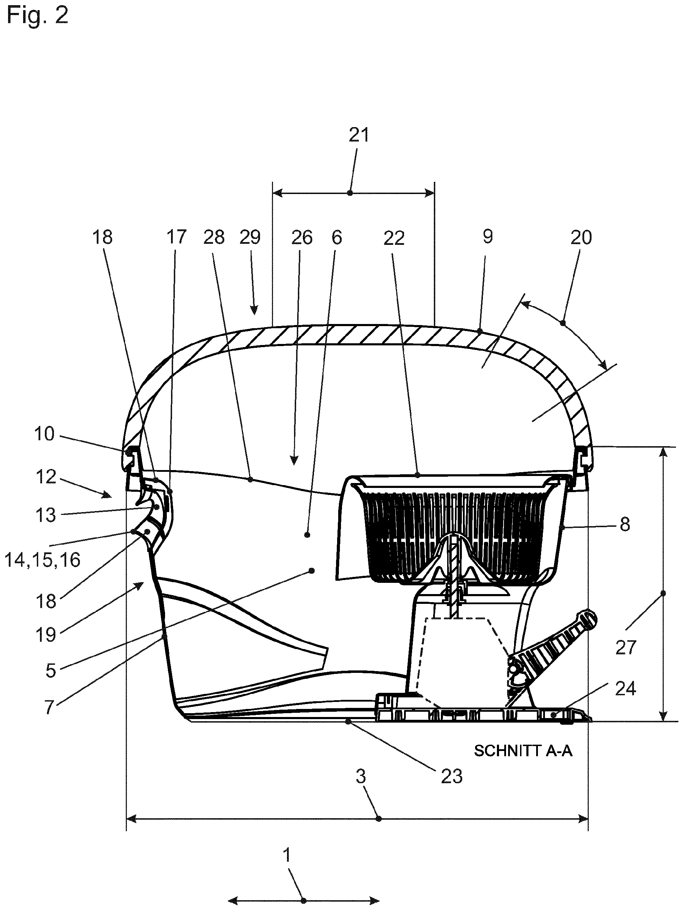

Die Durchbrechung 13 ist im hier gezeigten Ausführungsbeispiel als Tropfschutz 14 ausgebildet und umfasst eine Tropfnase 15, die sich entlang der Unterseite 16 der Durchbrechung erstreckt.
Besser zu erkennen ist die Tropfnase 15 in den Figuren 2, 3 und 5.

Im hier gezeigten Ausführungsbeispiel ist die Tropfnase 15 als separat erzeugtes Einzelteil 18 ausgebildet und flüssigkeitsdicht in die Durchbrechung 13 eingesetzt.

Die Markierung 19 ist einstückig ineinander übergehend und materialeinheitlich mit der Tropfnase 15 ausgebildet, zur Anzeige des maximal zulässigen Füllstands im Eimer. Die Markierung 19 ist im Inneren des Eimers angeordnet, ebenso wie die Auswringvorrichtung 22 für ein Reinigungsgerät. Das Reinigungsgerät kann zum Beispiel durch einen Reinigungsmopp gebildet sein. Die Auswringvorrichtung 22 kann, wie hier gezeigt, durch einen Schleuderkorb gebildet sein, der, wie aus dem Stand der Technik bekannt, mechanisch oder elektrisch angetrieben ist.

Der Henkel 9 weist unterschiedliche Griffbereiche 20, 21 auf.
Der erste Griffbereich 20 ist, in Längsrichtung 1 betrachtet, auf der dem Ausguss 12 abgewandten Seite angeordnet und erleichtert das Ausgießen des Inhalts des Eimers. Im hier gezeigten Ausführungsbeispiel ist der erste Griffbereich 20 griffig profiliert und/oder gummiert.

Der zweite Griffbereich 21 ist demgegenüber in Längsrichtung 1 mittig des Henkels 9 angeordnet und bildet eine Tragezone. Die Tragezone ist derart gestaltet, dass sich auch der voll befüllte Eimer möglichst ergonomisch und angenehm tragen lässt.

Wie in dieser Figur gut zu erkennen ist, weist der Henkel 9 eine klammerförmige Aufnahme 29 auf, in der der Stiel eines hier nicht dargestellten Reinigungsmopps formschlüssig aufgenommen werden kann. Dadurch besteht die Möglichkeit, dass der Reinigungsmopp senkrecht stehend im Eimer gehalten wird.

Im Bereich des Eimerbodens 23, in Längsrichtung 1 hinten, ist ein Griff 24 angeordnet, durch den das Entleeren des Eimers erleichtert wird.
Der Griff 24 kann einen Bestandteil des Eimerbodens 23 bilden oder, wie hier, einen Bestandteil eines Antriebs der Auswringvorrichtung 22.

In Figur 2 ist der Eimer aus Figur 1 teilweise längsgeschnitten gezeigt. Der Henkel 9 erstreckt sich in Längsrichtung 1 über die gesamte zweite Erstreckung 4 und ist im Bereich der Anlenkungen 10, 11 an den Querseiten 7, 8 des Eimers in Querrichtung 2 schwenkbar befestigt.
Die Auswringvorrichtung 22, hier in Form eines Schleuderkorbs, und deren Antrieb sind schematisch gezeigt. Die Auswringvorrichtung 22 kann zum Beispiel in den die Öffnung 26 begrenzenden Rand 28 des Eimers formschlüssig eingeschnappt sein.

Die als separat erzeugtes Einzelteil 18 ausgebildete Tropfnase 15 ist deutlich konturiert und sorgt bei Entleerung des Eimers dafür, dass der Inhalt des Eimers vollständig entleert wird und, im Anschluss an die Entleerung, keine Tropfen am Ausguss 12 verbleiben, die anschließend unerwünscht in die Umgebung abtropfen könnten.

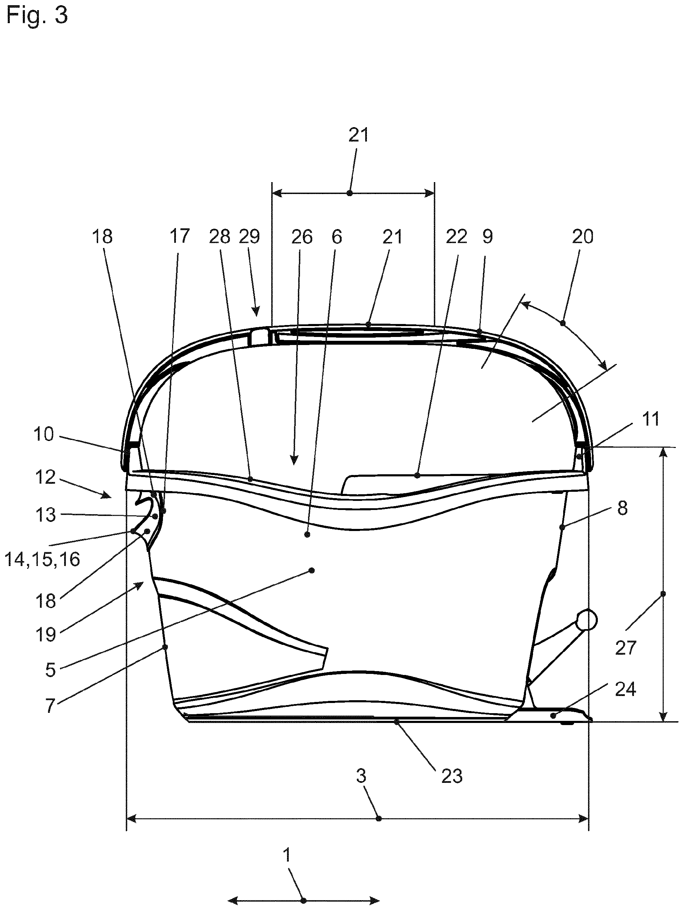

In Figur 3 ist eine Seitenansicht des Eimers aus Figur 2 gezeigt. Lediglich die Tropfnase 15 ist im Schnitt dargestellt. Die beiden Griffbereiche 20, 21 sind in dieser Darstellung gut zu erkennen, ebenso wie die klammerförmige Aufnahme 29 für ein nicht dargestelltes Reinigungsgerät.

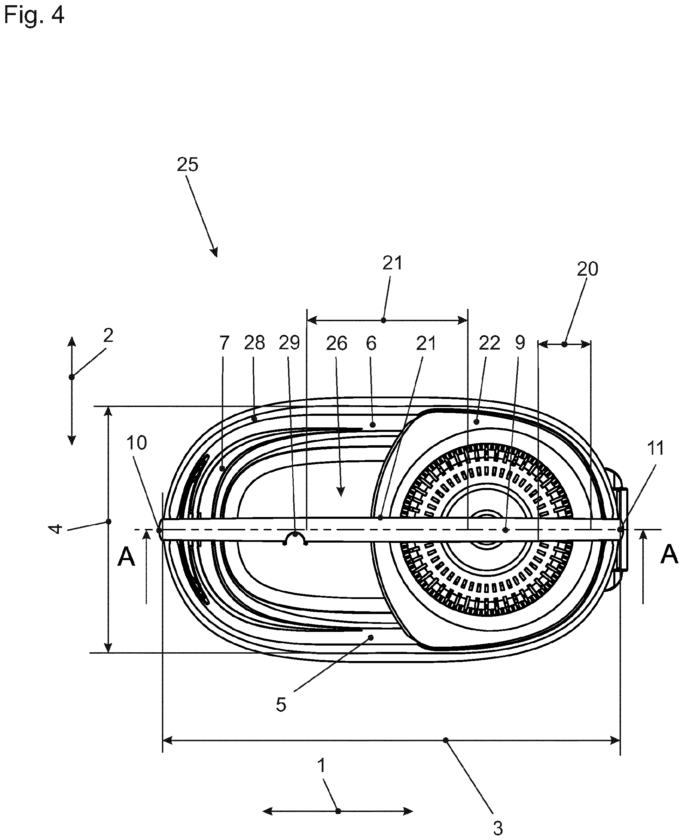

In Figur 4 ist eine Draufsicht auf den Eimer aus den Figuren 1 bis 3 gezeigt. Die Auswringvorrichtung 22 überdeckt einen Teil der Öffnung 26.
Durch die Krümmung der vorderen Querseite 7 und durch die in Umfangsrichtung in sich geschlossene Durchbrechung 13, die den Ausguss 12 bildet, lässt sich der Inhalt des Eimers gut kontrollierbar in einem schmalen Strahl entleeren, wobei die Gefahr des Verschüttens des Inhalts auf ein Minimum reduziert ist.

Der Ausguss 12 ist von keinem Bauteil des Eimers versperrt, insbesondere nicht von der vorderen Anlenkung 10 des Henkels 9 an der vorderen Querseite 7, weil sich der Ausguss 12, in der Höhe 27 des Eimers betrachtet, unterhalb der vorderen Anlenkung 10 befindet.

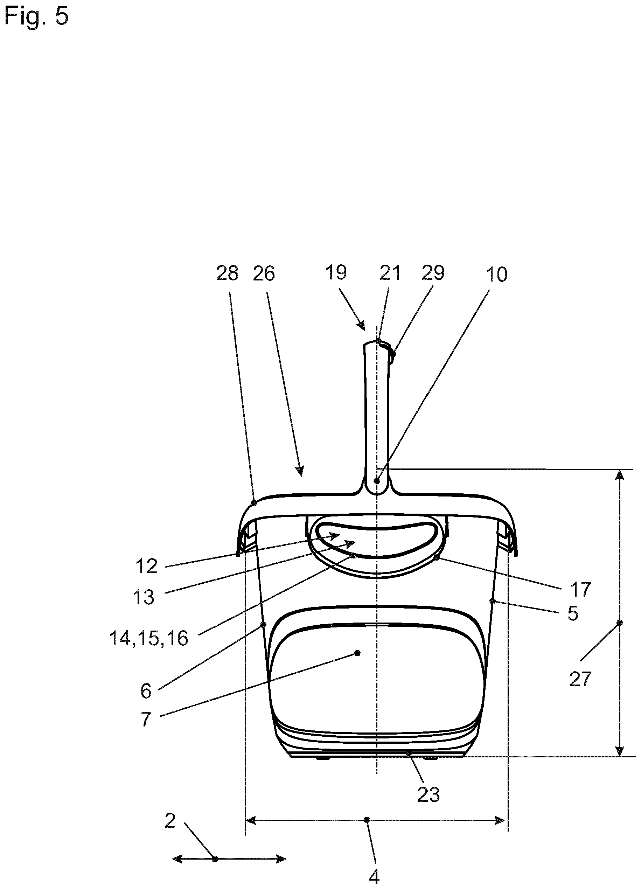

In Figur 5 ist eine Ansicht des Eimers von vorne gezeigt. Die in sich geschlossene Durchbrechung 13 hat die als Tropfschutz 14 ausgebildete Tropfnase 15, die sich entlang der Unterseite 16 der Durchbrechung 13 erstreckt.
Die Durchbrechung 13 weist, in Umfangsrichtung betrachtet, eine im Wesentlichen halbmondförmige Gestalt auf. Eine derartige Gestalt hat sich besonders bewährt, weil durch eine derartige Durchbrechung 13 der Inhalt des Eimers besonders gut kontrollierbar, gleichmäßig und spritzerarm entleert werden kann.

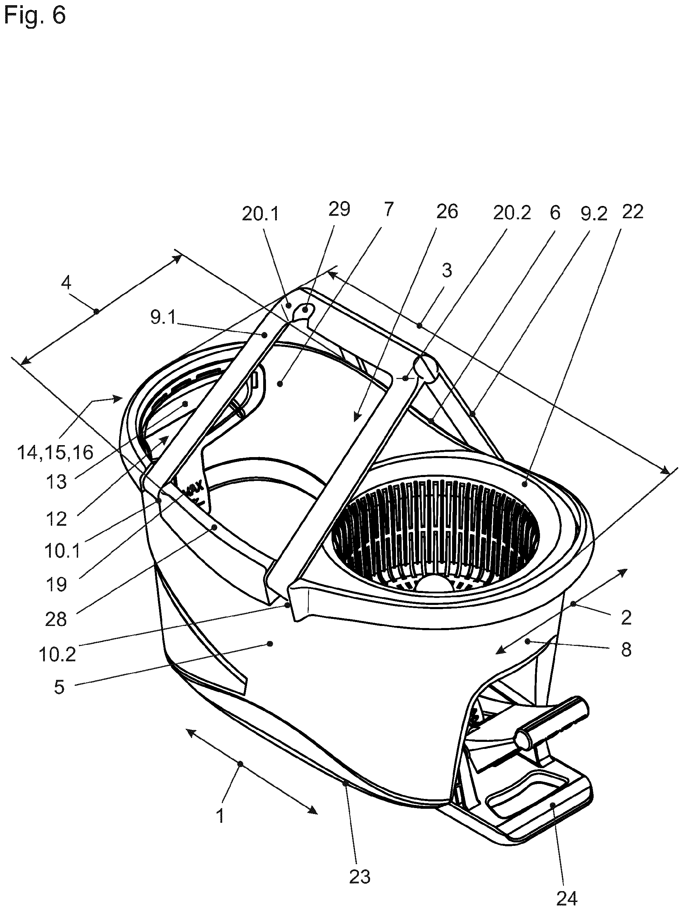

In den Figuren 6 bis 10 ist ein zweites Ausführungsbeispiel eines erfindungsgemäßen Eimers gezeigt. Das zweite Ausführungsbeispiel unterscheidet sich vom ersten Ausführungsbeispiel gemäß den Figuren 1 bis 5 nur durch die Anzahl der Henkel 9, 9.1, 9.2 und deren Anlenkung 10, 10.1, 10.2; 11, 11.1, 11.2.

Die beiden Henkel 9.1, 9.2 erstrecken sich parallel zueinander, wobei jeder der Henkel eine vordere Anlenkung 10.1, 10.2 und eine hintere Anlenkung 11.1, 11.2 aufweist. Die Henkel 9.1, 9.2 sind jeweils an einer Längsseite 5, 6 des Eimers angelenkt und ebenfalls, wie der Henkel 9 aus dem ersten Ausführungsbeispiel, in Querrichtung 2 schwenkbar.
Ist der Eimer abgestellt, sind die Henkel 9.1, 9.2 nach unten geklappt. Wird der Eimer demgegenüber getragen, sind die Henkel 9.1, 9.2 nach oben geklappt, derart, dass sich die zweiten Griffbereiche 21.1, 21.2 über dem Eimer anliegend berühren, so wie hier dargestellt.

Durch die beiden Henkel 9.1, 9.2 besteht die Möglichkeit, dass der Eimer gleichzeitig von zwei Personen getragen wird. Jeder hält dabei einen der Henkel 9.1, 9.2. Dadurch können auch großvolumige und voll befüllte Eimer relativ bequem getragen werden.

In Figur 6 ist ein zweites Ausführungsbeispiel des erfindungsgemäßen Eimers in einer perspektivischen Darstellung gezeigt.

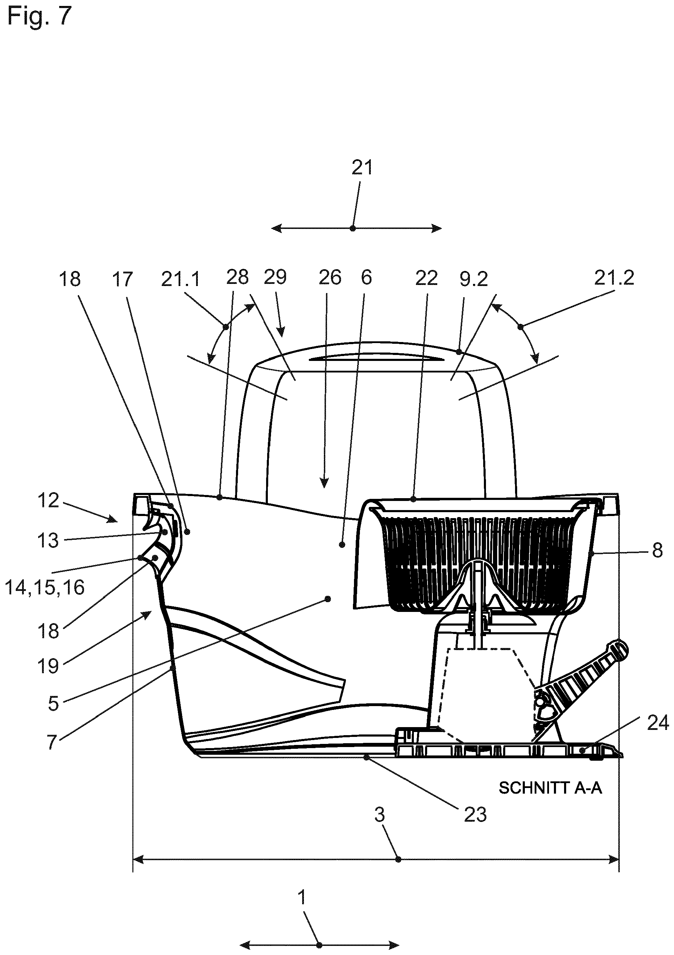

Figur 7 zeigt einen Längsschnitt durch den Eimer aus Figur 6.

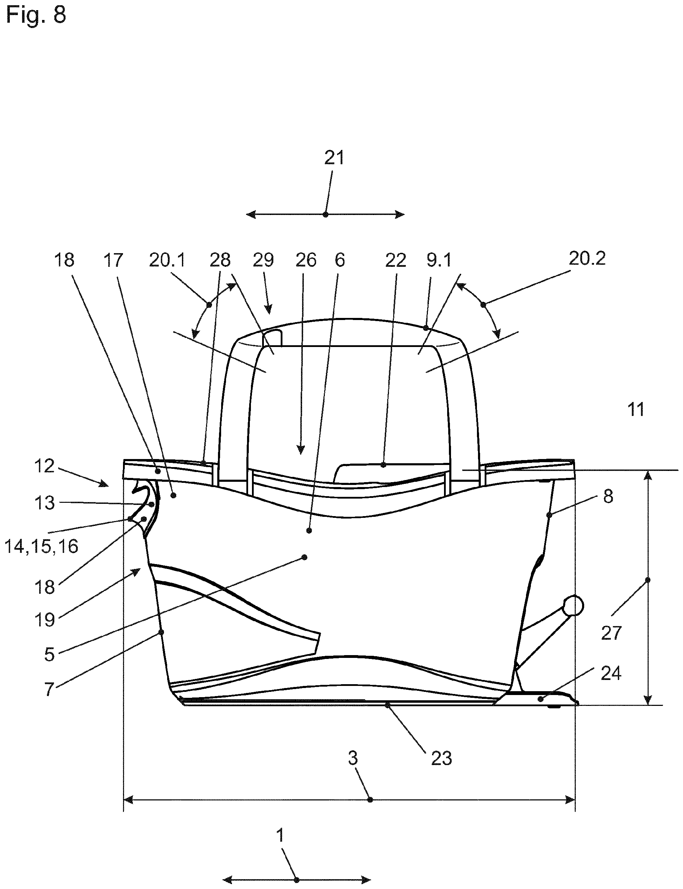

In Figur 8 ist eine Seitenansicht des Eimers aus Figur 7 dargestellt.

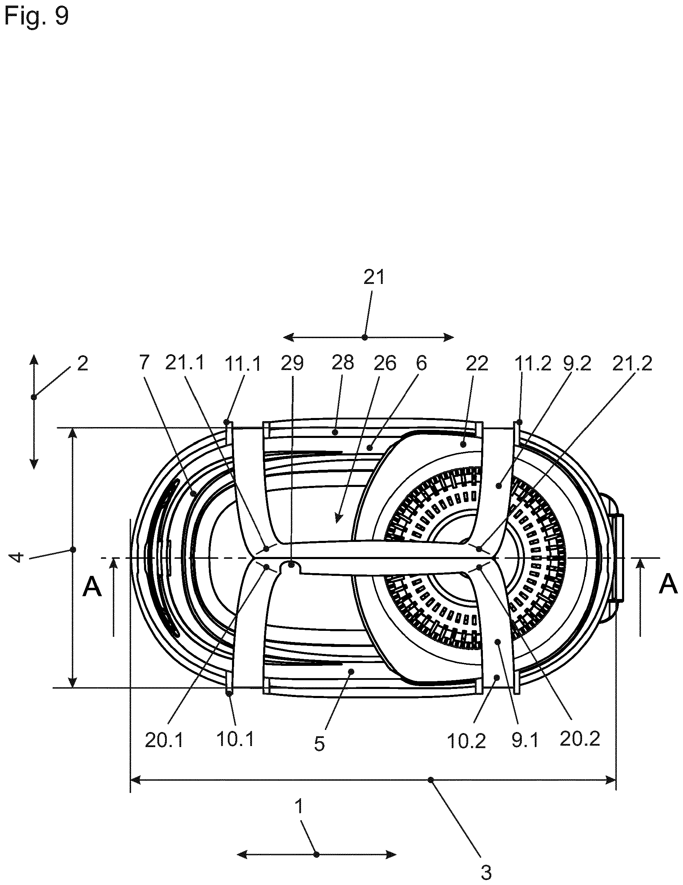

Figur 9 zeigt demgegenüber eine Draufsicht auf den Eimer gemäß Figur 6.

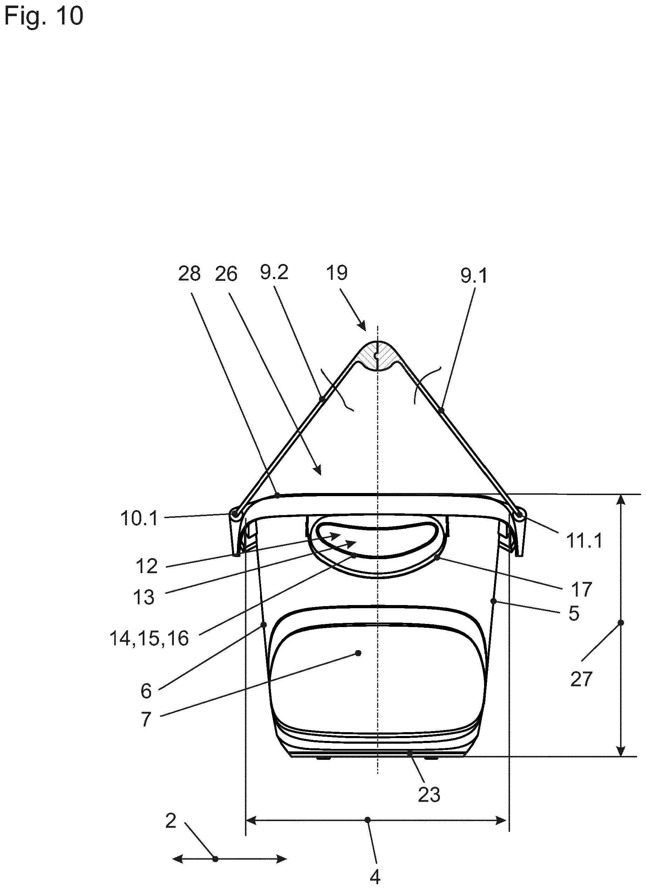

In Figur 10 ist eine Vorderansicht des Eimers aus Figur 6 gezeigt, mit der Durchbrechung 13, die eine als Tropfschutz 14 ausgebildete Tropfnase 15 aufweist, die sich entlang der Unterseite 16 der Durchbrechung 13 erstreckt.

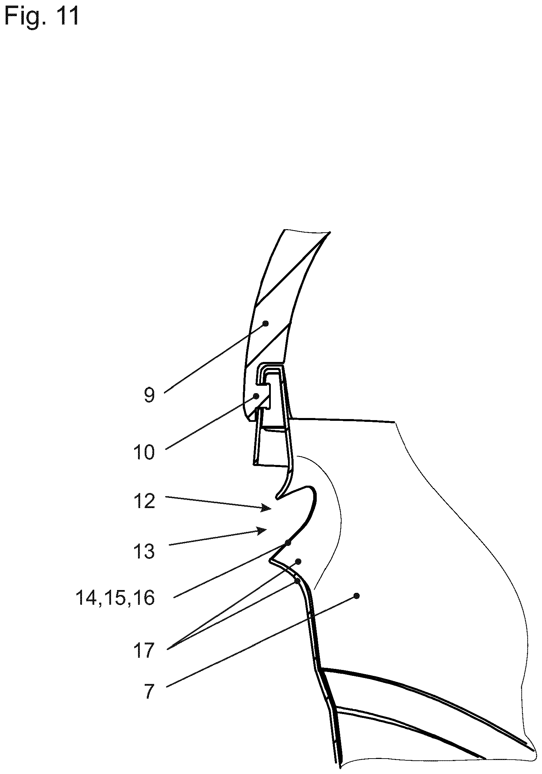

In Figur 11 ist eine weitere Tropfnase 15 gezeigt, die abweichend von den Tropfnasen 15 aus den Figuren 1 bis 10 gestaltet ist.
Die Tropfnase 15 ist schnabelförmig gestaltet. Die Tropfnase 15 bildet einen einstückigen Bestandteil der Begrenzung 17 der Durchbrechung 13 auf deren Unterseite 16 und ist einstückig ineinander übergehend und materialeinheitlich mit der vorderen Querseite 7 des Eimers ausgebildet.

## Patentansprüche

1. Eimer, mit einer Längsrichtung (1) und einer Querrichtung (2), der eine erste Erstreckung (3) in Längsrichtung (1) und eine zweite Erstreckung (4) in Querrichtung (2) aufweist, wobei die erste Erstreckung (3) größer als die zweite Erstreckung (4) ist, umfassend zwei Längsseiten (5, 6) sowie eine vordere (7) und eine hintere Querseite (8) und zumindest einen im Wesentlichen bügelförmigen Henkel (9, 9.1, 9.2), wobei sich der zumindest eine Henkel (9, 9.1, 9.2) in Längsrichtung (1) erstreckt und in Querrichtung (2) schwenkbar ist, **dadurch gekennzeichnet, dass** ein Ausguss (12) des Eimers als eine in sich geschlossene Durchbrechung (13) ausgebildet und in der vorderen Querseite (7) angeordnet ist.

2. Eimer nach Anspruch 1, **dadurch gekennzeichnet, dass** das Verhältnis aus erster Erstreckung (3) zu zweiter Erstreckung (4) ≥ 1,5 ist.

3. Eimer nach einem der Ansprüche 1 oder 2, **dadurch gekennzeichnet, dass** die Durchbrechung (13) eine als Tropfschutz (14) ausgebildete Tropfnase (15) aufweist, die sich entlang der Unterseite (16) der Durchbrechung (13) erstreckt.

4. Eimer nach Anspruch 3, **dadurch gekennzeichnet, dass** die Tropfnase (15) einstückig mit der Begrenzung (17) der Durchbrechung (13) ausgebildet ist.

5. Eimer nach Anspruch 4, **dadurch gekennzeichnet, dass** die Tropfnase (15) als separat erzeugtes Einzelteil (18) ausgebildet und flüssigkeitsdicht in der Durchbrechung (13) angeordnet ist.

6. Eimer nach Anspruch 5, **dadurch gekennzeichnet, dass** die Tropfnase (15) durch eine kraft- und/oder formschlüssige Verbindung zerstörungsfrei lösbar in der Durchbrechung (13) angeordnet ist.

7. Eimer nach einem der Ansprüche 5 oder 6, **dadurch gekennzeichnet, dass** die Tropfnase (15) eine sich in den Eimer erstreckende Markierung (19) zur Anzeige des maximal zulässigen Füllstands im Eimer aufweist.

8. Eimer nach einem der Ansprüche 1 bis 7, **gekennzeichnet durch** einen Henkel (9), der durch eine vordere (10) und eine hintere Anlenkung (11) an den entsprechenden Querseiten (7, 8) angelenkt ist und dass der Ausguss (12) unterhalb der vorderen Anlenkung (10) angeordnet ist.

9. Eimer nach Anspruch 8, **dadurch gekennzeichnet, dass** die Anlenkungen (10, 11), in Querrichtung (2) betrachtet, jeweils mittig an den entsprechenden Querseiten (7, 8) angeordnet sind.

10. Eimer nach einem der Ansprüche 8 oder 9, **dadurch gekennzeichnet, dass** der Henkel (9), in Längsrichtung (1) betrachtet, auf der dem Ausguss (12) abgewandten Seite einen im Wesentlichen rutschfesten ersten Griffbereich (20) aufweist.

11. Eimer nach einem der Ansprüche 1 bis 7, **gekennzeichnet durch** zwei sich im Wesentlichen parallel zueinander erstreckende Henkel (9.1, 9.2), von denen jeder Henkel (9.1, 9.2) jeweils durch eine vordere (10.1, 10.2) und jeweils durch eine hintere Anlenkung (11.1, 11.2) an einer der Längsseiten (5, 6) angelenkt ist und dass die Henkel (9.1, 9.2), in Querrichtung (2) betrachtet, zum Tragen des Eimers über dem Eimer aneinander anlegbar sind.

12. Eimer nach einem der Ansprüche 1 bis 11, **dadurch gekennzeichnet, dass** die Henkel (9, 9.1, 9.2) in Längsrichtung (1) mittig jeweils einen als Tragezone ausgebildeten zweiten Griffbereich (21, 21.1, 21.2) aufweisen.

13. Eimer nach einem der Ansprüche 1 bis 12, umfassend eine Auswringvorrichtung (22) für ein Reinigungsgerät.

14. Eimer nach einem der Ansprüche 1 bis 13, **dadurch gekennzeichnet, dass** der Henkel (9) oder zumindest einer der Henkel (9.1, 9.2) eine klammerförmige Aufnahme (29) für den Stiel eines Reinigungsgeräts aufweist.

15. Eimer nach einem der Ansprüche 1 bis 14, **dadurch gekennzeichnet, dass** er einen Eimerboden (23) aufweist, mit einem in Längsrichtung (1) hinten angeordneten Griff (24).

16. Eimer nach einem der Ansprüche 1 bis 15, **dadurch gekennzeichnet, dass** er, in einer Draufsicht (27) betrachtet, in Querrichtung (2) symmetrisch ausgebildet ist.

## Claims

1. Bucket which has a longitudinal direction (1) and a transverse direction (2), and a first extent (3) in the longitudinal direction (1) and a second extent (4) in the transverse direction (2), wherein the first extent (3) is greater than the second extent (4), comprising two longitudinal sides (5, 6) and also a front transverse side (7) and a rear transverse side (8) and at least one essentially bail-form handle (9, 9.1, 9.2), wherein the at least one handle (9, 9.1, 9.2) extends in the longitudinal direction (1) and can be pivoted in the transverse direction (2), **characterized in that** a spout (12) of the bucket is designed in the form of a self-contained through-passage (13) and is arranged in the front transverse side (7).

2. Bucket according to Claim 1, **characterized in that** the ratio of first extent (3) to second extent (4) ≥ 1.5.

3. Bucket according to one of Claims 1 or 2, **characterized in that** the through-passage (13) has a drip projection (15), which is designed in the form of a drip guard (14) and extends along the underside (16) of the through-passage (13).

4. Bucket according to Claim 3, **characterized in that** the drip projection (15) is formed in one piece with the boundary (17) of the through-passage (13).

5. Bucket according to Claim 4, **characterized in that** the drip projection (15) is designed in the form of a separately produced individual part (18) and is arranged in a liquid-tight manner in the through-passage (13).

6. Bucket according to Claim 5, **characterized in that** the drip projection (15) is arranged in the through-passage (13) such that it can be released in a nondestructive manner by a force-fitting and/or form-fitting connection.

7. Bucket according to one of Claims 5 or 6, **characterized in that** the drip projection (15) has a marking (19), which extends into the bucket and is intended to indicate the maximum-permissible filling level in the bucket.

8. Bucket according to one of Claims 1 to 7, **characterized by** a handle (9) which is articulated on the corresponding transverse sides (7, 8) by a front articulation (10) and a rear articulation (11), and in that the spout (12) is arranged beneath the front articulation (10).

9. Bucket according to Claim 8, **characterized in that**, as seen in the transverse direction (2), the articulations (10, 11) are each arranged centrally on the corresponding transverse sides (7, 8).

10. Bucket according to one of Claims 8 or 9, **characterized in that**, as seen in the longitudinal direction (1), the handle (9) has an essentially slip-resistant first grip region (20) on the side directed away from the spout (12).

11. Bucket according to one of Claims 1 to 7, **characterized by** two handles (9.1, 9.2), which extend essentially parallel to one another and of which each handle (9.1, 9.2) is articulated on one of the longitudinal sides (5, 6) in each case by a front articulation (10.1, 10.2) and in each case by a rear articulation (11.1, 11.2), and in that, as seen in the transverse direction (2), the handles (9.1, 9.2) can be positioned against one another above the bucket for the purpose of carrying the bucket.

12. Bucket according to one of Claims 1 to 11, **characterized in that**, as seen in the longitudinal direction (1), the handles (9, 9.1, 9.2) each have, in the centre, a second grip region (21, 21.1, 21.2), which is designed in the form of a carrying zone.

13. Bucket according to one of Claims 1 to 12, comprising a wringer (22) for a cleaning appliance.

14. Bucket according to one of Claims 1 to 13, **characterized in that** the handle (9), or at least one of the handles (9.1, 9.2), has a clamp-form mount (29) for the elongate handle of a cleaning appliance.

15. Bucket according to one of Claims 1 to 14, **characterized in that** it has a bucket base (23) with a grip (24) arranged at the rear, as seen in the longitudinal direction (1).

16. Bucket according to one of Claims 1 to 15, **characterized in that**, as seen in a plan view (27), it is designed symmetrically in the transverse direction (2) .

## Revendications

1. Seau, comprenant une direction longitudinale (1) et une direction transversale (2), qui présente une première étendue (3) dans la direction longitudinale (1) et une deuxième étendue (4) dans la direction transversale (2), la première étendue (3) étant supérieure à la deuxième étendue (4), comprenant deux côtés longitudinaux (5, 6) ainsi qu'un côté transversal avant (7) et un côté transversal arrière (8) et au moins une anse (9, 9.1, 9.2) essentiellement en forme d'étrier, l'au moins une anse (9, 9.1, 9.2) s'étendant dans la direction longitudinale (1) et pouvant pivoter dans la direction transversale (2), **caractérisé en ce qu'**une ouverture d'évacuation (12) du seau est réalisée sous forme d'orifice (13) fermé en soi et est disposée dans le côté transversal avant (7).

2. Seau selon la revendication 1, **caractérisé en ce que** le rapport de la première étendue (3) à la deuxième étendue (4) est ≥ 1,5.

3. Seau selon l'une quelconque des revendications 1 ou 2, **caractérisé en ce que** l'orifice (13) présente un bec verseur (15) réalisé sous forme de protection anti-goutte (14), lequel s'étend le long du côté inférieur (16) de l'orifice (13).

4. Seau selon la revendication 3, **caractérisé en ce que** le bec verseur (15) est réalisé d'une seule pièce avec la limitation (17) de l'orifice (13).

5. Seau selon la revendication 4, **caractérisé en ce que** le bec verseur (15) est réalisé sous forme de pièce individuelle (18) produite séparément et est disposé dans l'orifice (13) de manière étanche aux liquides.

6. Seau selon la revendication 5, **caractérisé en ce que** le bec verseur (15) est disposé dans l'orifice (13) par une connexion par force et/ou par engagement par correspondance de formes de manière à pouvoir être enlevé sans destruction.

7. Seau selon l'une quelconque des revendications 5 ou 6, **caractérisé en ce que** le bec verseur (15) présente un marquage (19) s'étendant dans le seau pour indiquer le niveau de remplissage maximal admissible dans le seau.

8. Seau selon l'une quelconque des revendications 1 à 7, **caractérisé par** une anse (9) qui est articulée par une articulation avant (10) et une articulation arrière (11) aux côtés transversaux correspondants (7, 8) et en ce que l'ouverture d'évacuation (12) est disposée en dessous de l'articulation avant (10).

9. Seau selon la revendication 8, **caractérisé en ce que** les articulations (10, 11), vues dans la direction transversale (2), sont à chaque fois disposées centralement au niveau des côtés transversaux correspondants (7, 8).

10. Seau selon l'une quelconque des revendications 8 ou 9, **caractérisé en ce que** l'anse (9), vue dans la direction longitudinale (1), présente sur le côté opposé à l'ouverture d'évacuation (12), une première région de préhension (20) essentiellement antidérapante.

11. Seau selon l'une quelconque des revendications 1 à 7, **caractérisé par** deux anses (9.1, 9.2) s'étendant essentiellement parallèlement l'une à l'autre, chaque anse (9.1, 9.2) étant à chaque fois articulée par une articulation avant (10.1, 10.2) et par une articulation arrière (11.1, 11.2) à l'un des côtés longitudinaux (5, 6) et en ce que les anses (9.1, 9.2), vues dans la direction transversale (2), peuvent être appliquées l'une contre l'autre au-dessus du seau pour porter le seau.

12. Seau selon l'une quelconque des revendications 1 à 11, **caractérisé en ce que** les anses (9, 9.1, 9.2) présentent au centre dans la direction longitudinale (1) à chaque fois une deuxième région de préhension (21, 21.1, 21.2) réalisée en tant que zone de portage.

13. Seau selon l'une quelconque des revendications 1 à 12, comprenant un dispositif d'essorage (22) pour un ustensile de nettoyage.

14. Seau selon l'une quelconque des revendications 1 à 13, **caractérisé en ce que** l'anse (9) ou au moins l'une des anses (9.1, 9.2) présente un logement en forme de pince (29) pour le manche d'un ustensile de nettoyage.

15. Seau selon l'une quelconque des revendications 1 à 14, **caractérisé en ce qu'**il présente un fond de seau (23) avec une prise (24) disposée à l'arrière dans la direction longitudinale (1).

16. Seau selon l'une quelconque des revendications 1 à 15, **caractérisé en ce que**, considéré en vue de dessus (27), il est réalisé de manière symétrique dans la direction transversale (2).
